# FASCICULE DE BREVET EUROPEEN

(11) **EP 1 240 707 B1**
(45) Date de publication et mention de la délivrance du brevet: **08.04.2009**
(21) Numéro de dépôt: 00990094.5
(22) Date de dépôt: 21.12.2000
(51) Int. Cl.: H02M 7/537, H02M 1/088

(54) **GENERATEUR DE SIGNAL ELECTRIQUE A FREQUENCE VARIABLE, ASSERVISSEMENT ET MOYENS DE CALCUL DE FAIBLE COUT**
SIGNALGENERATOR MIT VARIABLER FREQUENZ, MIT BILLIGEN REGELKREIS UND BERECHNUNGSMITTEL
VARIABLE FREQUENCY ELECTRIC SIGNAL GENERATOR, AUTOMATIC CONTROL AND LOW COST COMPUTING MEANS

(30) Priorité: 23.12.1999 FR 9916427
(43) Date de publication de la demande: 18.09.2002
(73) Titulaire: DELACHAUX S.A., 92230 Gennevilliers (FR)
(72) Inventeur: LACOUR, Gilles, F-01300 Belley (FR)
(74) Mandataire: Texier, Christian
(86) Numéro de dépôt international: PCT/FR2000/003637
(87) Numéro de publication internationale: WO 2001/048905

(56) Documents cités:
- EP-A- 0 603 655
- EP-A- 0 735 656
- WO-A-90/14716
- US-A- 5 523 676

## Description

L'invention concerne les générateurs de signal électrique par découpage d'une tension continue.

La génération d'un signal électrique par découpage d'une tension continue est bien connue sous le terme de modulation de largeur d'impulsions. La fréquence est généralement fixe mais elle peut être variable dans des dispositifs tels que les convertisseurs de fréquence. Pour générer les signaux de commande du dispositif de découpage, le plus souvent des transistors IGBT, il y a trois méthodes principales.

Dans la première, les largeurs d'impulsions sont mises dans des tables qui sont lues par un calculateur. Cette méthode est rapide à l'exécution mais peu souple elle nécessite des espaces mémoires importants car il faut une table pour chaque combinaison d'amplitude du signal et de fréquence. Cette méthode a été utilisée dans les premiers convertisseurs de fréquence qui ne pouvaient disposer de calculateurs puissants.

Suivant une seconde méthode, un composant spécialisé fabrique les signaux de découpage à partir de l'intersection du signal à réaliser et d'un signal en dents de scie. Cette méthode est couramment utilisée pour des convertisseurs de fréquence simples. Elle a deux limites. La fonction à générer doit rester simple. Les asservissements pour améliorer les performances sont externes et difficiles à réaliser.

Dans une troisième méthode, un calculateur puissant détermine les largeurs d'impulsions à partir d'un algorithme plus ou moins complexe. Des facteurs de correction sont introduits à partir de mesures des signaux à générer après un traitement mathématique pas toujours évident. La régulation des signaux sur une grandeur nécessite un traitement mathématique lourd. Cette méthode efficace fait appel à des composants coûteux car obligatoirement très rapides. Elle est utilisée dans les plus gros convertisseurs de fréquence d'aujourd'hui.

Cette méthode est par exemple illustrée dans le document US 5 523 676, où un micro-processeur réalise l'ensemble des fonctions nécessaires à la commande, c'est à dire la prise en compte d'un signal de référence, la comparaison de ce signal avec un signal de retour représentant le signal généré, et la production de commandes de commutation. Dans ce document antérieur, le microprocesseur est nécessairement un microprocesseur à fortes capacités, qui présente l'inconvénient d'être coûteux.

Un générateur de signal similaire est décrit dans le document DE 4337501.

La présente invention vise à proposer un générateur de signal électrique par découpage d'une tension continue, par exemple un convertisseur de fréquence, qui soit peu coûteux tout en étant suffisamment performant.

Ce but est atteint selon l'invention grâce à un générateur de signal comprenant un générateur d'au moins un signal de référence constitué par un calculateur logique, au moins un commutateur de découpage, au moins un capteur pour prélever au moins un signal généré en réponse aux commutations dudit au moins un commutateur, au moins un comparateur pour délivrer une valeur dépendant de la différence entre ledit au moins un signal prélevé et ledit au moins un signal de référence, et un moyen de commande dudit au moins un commutateur prévu pour délivrer sur ledit au moins un commutateur un ou des niveau(x) de commande qui est ou sont fonction(s) du ou des résultat(s) de cette comparaison .ou de ces comparaison(s), caractérisé en ce que le calculateur logique comporte une ou des entrée(s) recevant le ou les résultat(s) de la ou des comparaison(s), et une ou des sortie(s) par laquelle ou lesquelles le calculateur délivre un ou des niveau(x) de commande au(x) commutateur(s), et en ce que le calculateur logique est programmé pour actualiser à des instants prédeterminés le(s) niveau(x) de commande délivré(s) en fonction du ou des résultat(s) de comparaison(s) reçu(s).

D'autres caractéristiques, buts et avantages de l'invention apparaîtront à la lecture de la description qui va suivre, faite en référence qux figures annexées sur lesquelles :
- la figure 1 représente un premier circuit conforme à l'invention
- la figure 2 est un tracé représentant une courbe d'intensité obtenue dans une charge placée en sortie du circuit de la figure 1 ;
- la figure 3 est un tracé représentant l'évolution de la tension et de l'intensité dans cette même charge en fonction du temps, ainsi que la forme d'une tension découpée fournie en entrée de la charge par le circuit de la figure 1 ;
- la figure 4 est un tracé représentant la forme d'une courbe de référence fournie par un microcontroleur du circuit de la figure 1 en fonction d'une fréquence choisie pour cette courbe de référence ;
- a figure 5 représente des signaux de tension obtenus avec un circuit selon l'invention sur une charge ;
- la figure 6 représente un second circuit selon l'invention, à alimentation triphasée.
- la figure 7 représente une courbe transmise par un convertisseur numérique / analogique du circuit de la figure 6 sur trois comparateurs de ce même circuit.
- la figure 8 représente un circuit d'élimination d'énergie électrique produite par un moteur asynchrone placé en sortie du circuit du circuit de la figure 6 dans un mode de freinage de ce moteur.
- la figure 9 représente une forme idéale de tension de commande de transistor IGBT ;
- la figure 10 représente un circuit de mise en forme selon l'invention ;
- la figure 11 représente une courbe de commande de transistor selon l'art antérieur
- la figure 12 un circuit de freinage de moteur selon l'invention ;
- la figure 13 représente un générateur sans contact selon l'invention.

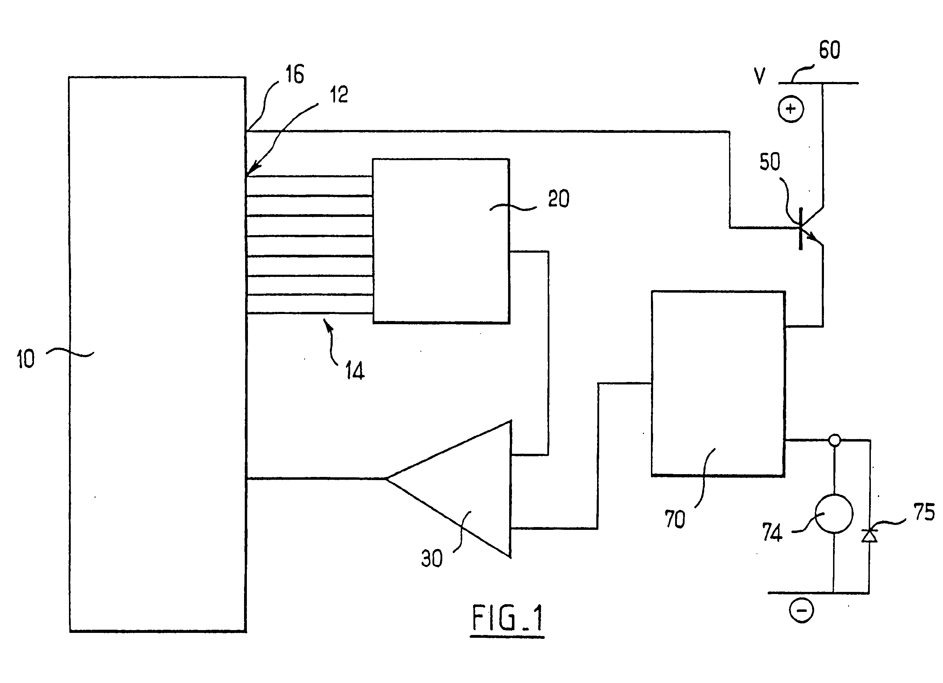

Le circuit d'alimentation de la figure 1 inclut un microcontroleur 10 dont une sortie 12 délivre, par l'intermédiaire d'un bus 14, un signal numérique appelé par la suite signal de référence.

Cette sortie 12 transmet ce signal sur un convertisseur numérique/analogique 20, qui le convertit en signal analogique et le transmet sur un comparateur analogique 30.

Ce comparateur 30 reçoit, sur une seconde entrée, un signal prélevé sur une charge en sortie du présente circuit d'alimentation.

Le comparateur 30, ayant sa sortie reliée au microcontroleur 10, a pour rôle d'indiquer à celui-ci le signe de la différence entre le signal prélevé et le signal de référence.

Le microcontroleur 10 présente en outre une sortie de commande 16 reliée à la borne de commande d'un transistor 50, placé entre une source de courant continu 60 et la borne positive d'une charge inductive 74, ici une boucle inductive de détection d'objets métalliques.

Cette charge peut également, comme on le décrira par la suite, être un boucle inductive destinée à appliquer un champ magnétique variable sur un dispositif de type à alimentation sans contact.

On place ici, en parallèle de la charge 74, une diode de roue libre 75 qui permet à la borne positive de la charge de se retrouver à la masse quand la tension d'alimentation est au niveau bas.

Entre le transistor 50 et la charge 74 est placé un capteur d'intensité 70, dont une sortie fournit le signal prélevé précédemment mentionné, véhiculé sur une entrée du comparateur 30.

Le microcontroleur 10 commande un découpage de la tension continue dans le but de reproduire sur la charge 74 un signal électrique de forme choisie, réalisant lui même les deux fonctions suivantes :
- déduire de la différence entre les signaux prélevé et de référence la commande à appliquer sur le commutateur de découpage 50 ;
- générer le signal de référence qui doit être retrouvé sur la charge 74.

Dans le cas présent, le signal prélevé au niveau de la charge 74 est le courant à travers celle-ci. Le microcontroleur 10 modifie donc, par la commande du commutateur 50, la tension instantanée dans la charge 74 pour obtenir une égalité entre le courant instantané souhaité et celui prélevé sur la charge.

Plus précisément, le microcontroleur 10 applique sur le commutateur 50 un traitement simple, qui consiste à le fermer quand l'intensité prélevé est en dessous de celle souhaitée, et à l'ouvrir quand l'intensité prélevé est supérieure à l'intensité de référence.

Les commutation du transistor 50 ne sont donc effectuées que lorsque nécessaires. Le signal découpé varie donc à la fois en fréquence et en rapport cyclique.

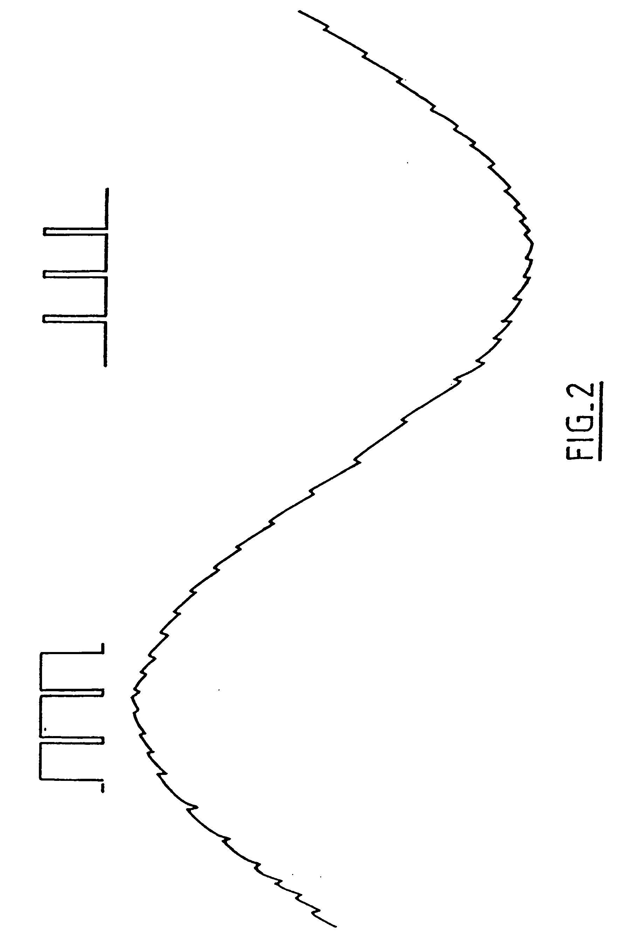

Comme représenté sur la figure 2, le signal de référence étant une sinusoïde, les commutations du transistor 50 sont moins fréquentes dans les parties à pente élevée que dans les parties à pente faible. En effet, dans les parties à pente élevée, il arrive souvent que le commutateur adopte une même position fermée pendant plusieurs mises à jour consécutives de son état par le microcontroleur 10, ce qui n'est pas le cas dans les parties à pente faible, où le microcontroleur a tendance à faire plus fortement osciller le commutateur 50 entre ses positions ouverte et fermée.

Du fait que le comparateur 30 fournit au microcontroleur 10 un résultat de comparaison en permanence sous la forme d'un signal résultat, (notamment car cette comparaison est faite sur des signaux analogiques), le microcontroleur 10 détermine lui même les instants où il prélève une valeur de ce signal résultat.

Ces instants sont choisis pour obtenir une commutation suffisamment rapide pour une mise à jour fine de l'égalité entre les deux signaux de référence et réel, sans outrepasser la vitesse limite de commutation du commutateur 50, et en fonction de la vitesse pouvant être mise en oeuvre par le microcontroleur 10.

Sur la courbe de la figure 2, c'est à dire l'évolution de l'intensité dans la charge 74, on a également indiqué la forme du signal de tension découpé transmis sur la charge 74 en correspondance avec certains endroits de cette courbe.

Aux maxima de la sinusoïde, le déphasage dû à l'inductance de la charge 74 restant assez faible, la tension moyenne aux bornes de celle-ci est également quasiment à son maximum, donc la tension découpée présente un rapport cyclique largement en faveur des créneaux hauts.

Au contraire, aux minima d'intensité, la tension découpée présente des créneaux bas plus longs que les créneaux hauts.

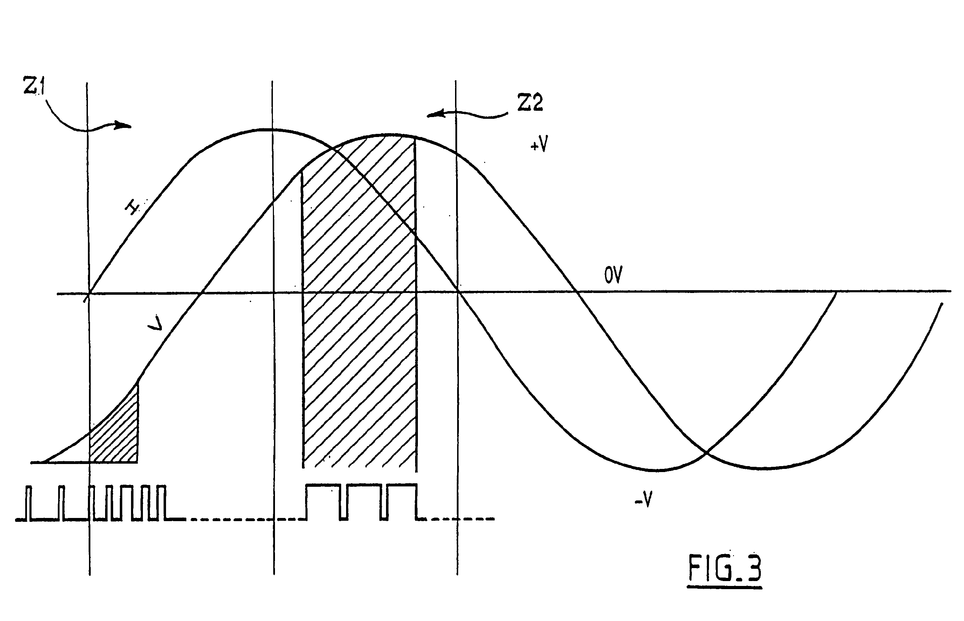

On a représenté sur la figure 3 l'évolution de l'intensité et de la tension sur la charge 74 en fonction d'un même axe des temps, en accentuant le déphasage entre ces deux courbes.

La courbe en courant correspond sensiblement à la courbe de référence du fait de l'asservissement en courant.

Sur cette figure, on a délimité deux zones Z1 et Z2 en référence à le forme de la courbe de courant. La première zone Z1 correspond au premier quart, montant, de la sinusoïde d'intensité, et la deuxième zone, Z2, au deuxième quart, descendant depuis le maximum vers le point zéro, de la cette même sinusoïde d'intensité.

Le microcontroleur 10 est programmé pour effectuer un comptage particulier dans chacune de ces deux zones Z1 et Z2.

Ainsi, à l'intérieur de chaque zone, le microcontroleur 10 examine, à des instants prédéterminés et régulièrement espacés dans cette zone, ici toutes les 27 microsecondes, si le commutateur 50 est dans son état fermé ou ouvert, en d'autres termes si la tension d'alimentation est à son niveau haut ou bas.

Le microcontroleur réalisant ici une mise à jour de l'état du commutateur 50 à intervalles réguliers, cet examen peut se faire à ces instants de mise à jour.

L'identification de l'état du commurtateur 50 est ici faite par le microcontroleur 10 à partir du signal reçu du comparateur 30, ce qui est rendu possible par le fait que la prochaine mise à jour du commutateur 50 est directement corrélée au résultat instantané de la comparaison à cet instant.

Le microcontroleur 10 compte donc le nombre de fois où il a identifié un état passant du commutateur 50 aux instants d'exemen régulièrement espacés dans chaque zone Z1 et Z2, ce qui représente sensiblement le rapport cyclique moyen sur chacune de ces zones.

Il est en outre programmé pour comparer ces deux valeurs de comptage. De cette comparaison, il déduit le déphasage entre la tension et l'intensité dans la charge.

En effet, le nombre obtenu pour chaque zone Z1 et Z2 est une indication de la valeur de la tension sur la zone. Cette zone étant indexée sur la forme de la courbe d'intensité, on établit par ces comptages une mesure du déphasage entre les deux courbes.

Si les courbes de tension et d'intensité étaient parfaitement en phase, on comprend que les comptes sur Z1 et sur Z2 correspondraient respectivement à la même forme de courbe, symétrique et de pente opposée. Les décomptes seraient donc du même type .

Au contraire, plus le déphasage entre les deux courbes sera élevé, plus les courbes de tension correspondant aux zones Z1 et Z2 de la courbe d'intensité auront des formes différentes, pas exemple l'une atteignant des valeurs négatives tandis que l'autre restant largement au dessus de zéro. Ainsi, plus le déphasage sera élevé, plus les décomptes réalisés sur les courbes en tension dans Z1 et Z2 seront différents.

Le microcontroleur effectue ici un calcul du rapport entre ces deux décomptes pour la détermination du déphasage.

Cette détermination du déphasage est utilisée ici pour la détection d'objets métalliques devant la bobine 70. En effet, la présence d'un objet métallique va modifier l'inductance aux bornes de la bobine 74 et modifier par conséquent le déphasage mesuré.

Plus précisément, le déphasage dépend du type d'objet métallique, notamment du type de métal et de la forme de l'objet. On prévoit d'établir, à l'aide du microcontroleur 10 ou d'un dispositif externe relié au microcontroleur 10, une recherche dans une table mémorisée donnant le type d'objet en fonction du déphasage mesuré.

Ce déphasage peut prendre la forme d'une brève distorsion de la courbe de tension, que le microcontroleur 10 identifie et distingue d'autres distorsions de la même façon, par un décompte d'états du commutateurs 50 à des instants prédéterminés, sur une zone limitée basée sur la forme de la courbe d'intensité.

On adopte pour cela des zones de décompte adaptées à la distorsion spécifique à l'objet ou au matériau attendu. Ainsi, si l'on souhaite détecter de l'aluminium, on sait que sa présence devant la boucle 74 va provoquer une distorsion principalement dans une zone de la courbe de tension correspondant au premier sixième de la courbe d'intensité, et c'est là que l'on place une zone de décompte. Le choix de la zone, en largeur et en position sur la courbe d'intensité, dépendra donc avantageusement du métal à détecter.

Le présent dispositif asservit la boucle en intensité et détecte des distorsions en tensions mais il est également possible d'asservir la boucle en tension en de détecter les distorsions en intensité. Plus généralement, l'invention ne se limite pas aux asservissements en intensité.

La microcontroleur 10 est prévu ici pour générer une sinusoïde dont on choisit la fréquence en transmettant au microcontroleur 10, sur une entrée non représentée de ce dernier, une valeur numérique représentative de la fréquence souhaitée.

Le microcontroleur 10 présente ici une mémoire dans laquelle est stockée une série de points constituant une demi-sinusoïde, que l'on nommera par la suite demi-sinusoïde de départ.

A partir de cette série de points, ici 252 points, c'est à dire 252 valeurs stockées consécutivement dans la mémoire, et à partir de la valeur d'entrée représentative de la fréquence, le microcontroleur 10 reconstitue une sinusoïde à la fréquence souhaitée, c'est à dire la courbe de référence, selon le procédé suivant :
Le microcontroleur 10 est programmé pour générer, toutes les 12 microsecondes, une valeur lue dans la série de valeurs de la demi-sinusoïde de départ.

Toutefois on prévoit qu'il ne passe à la valeur suivante de la demi-sinusoïde de référence que lorsque l'un particulier de ses bits est activé à l'instant où il doit générer une valeur. Faute d'activation de ce bit particulier, le microcontroleur émet à nouveau la valeur précédemment émise, sans passer à la valeur suivante de la série.

L'activation de ce bit est mise en oeuvre lorsqu'un compteur du microcontroleur, codé sur 8 bits, franchit la valeur 256.

Le passage à la valeur suivante de la série en mémoire se fait donc mécaniquement dans le microcontroleur 10 par détection du changement d'état d'un bit particulier d'une série de bits, de nombre identifiable, réservés au stockage d'une valeur de compteur.

Conformément au présent procédé, on incrémente en outre la valeur du compteur à chaque cycle du microcontroleur 10, c'est à dire toutes les 17 microsecondes ici, d'un incrément qui est égal à la valeur donnée en entrée du microcontroleur 10 comme indication de la fréquence du signal de référence à délivrer, c'est à dire ici de l'intensité à délivrer.

Par exemple, si cette valeur d'entrée est égale à 87, le compteur, par exemple initialement à zéro, passe aux cycles suivants à 87 (le microcontroleur 10 délivre alors sur sa sortie 12 la même valeur de la demi-sinusoïde que celle émise au cycle précédent), puis il passe à 174 (encore la même valeur sur la sortie 12), puis il passe à 174+87= 261, c'est à dire 256+5, soit 5 en stockage modulo 256 (sur 8 bits) : le compteur a alors dépassé la valeur 256, son bit spécial a été activé, et le microcontroleur 10 lit alors la valeur suivante de la demi-sinusoïde.

Une fois la demi-sinusoide totalement lue, un bit indicateur de partie de courbe indique qu'il faut maintenant lire la demi sinusoïde en lui appliquant un signe négatif.

Ainsi, le micro-contrôleur délivre sur la sortie 12 plusieurs fois la même valeur, et ne passe à la valeur suivante qu'une fois le compteur arrivé à sa valeur maximale. Le compteur étant incrémenté à chaque cycle d'un incrément choisi, le passage de la valeur maximale du compteur sera d'autant plus fréquent que cette valeur d'incrémentation choisie est élevée.

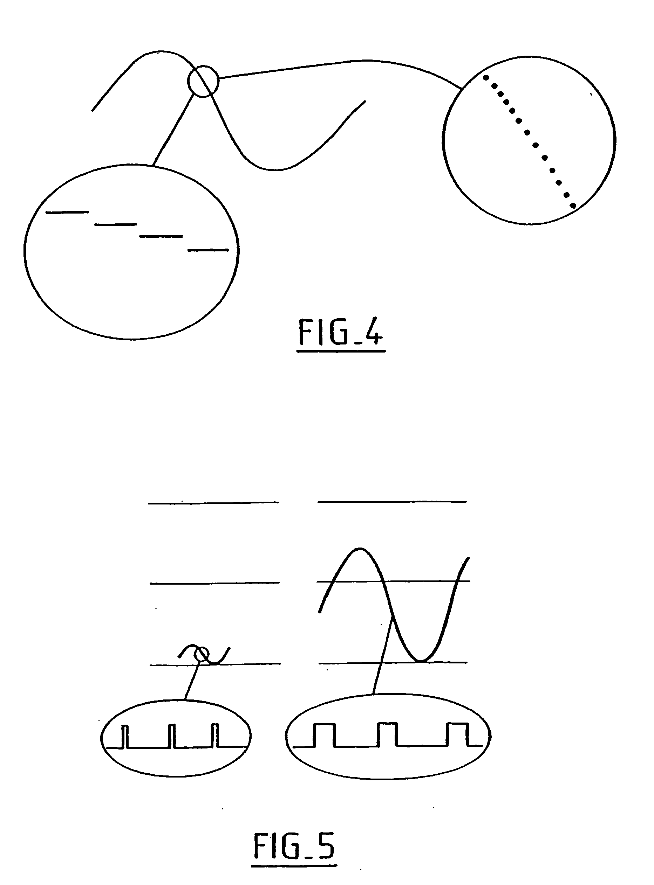

Ainsi, comme représenté à la figure 4, la sinusoïde de référence est constituée d'une série de paliers dont l'ordonnée est celle d'un point de la demi-sinusoïde de référence, et dont la longueur correspond au nombre de fois où est répété ce point, ce nombre de répétitions étant d'autant plus élevé que la valeur indicative de la fréquence est faible.

Le microcontroleur 10 étend donc la longueur des paliers d'autant plus que la valeur indicative de fréquence est faible, la fréquence de la courbe de référence est donc bien d'autant plus grande que la valeur indicative de fréquence est grande.

Ce procédé est mis en oeuvre dans le microcontroleur 10 avec un nombre d'instruction particulièrement faible. Il met en oeuvre une variation de fréquence avec un nombre de calculs et une mémoire très faible.

On notera que si la valeur de l'incrément choisi est élevée, par exemple de 250, il est possible que le microcontroleur ne répète qu'un ou deux points sur une sinusoïdale : celle-ci est donc étendue en durée par une distorsion localisé sur ce point .Toutefois une telle distorsion localisée s'avère ne pas avoir de conséquences néfastes sur le comportement de la charge dans la plupart des applications, mais procure tout de même une mise en oeuvre fine de la fréquence désirée.

On notera que si l'incrément choisi est suffisamment élevé, le microcontroleur 10 change de valeur lue, dans la demi sinusoïdale de départ, pratiquement à chaque incrémentation.

On obtient alors une courbe de référence telle que celle de la figure 4 à droite, ne présentant pratiquement aucun palier.

Le présent procédé ne nécessite donc, pour être mis en oeuvre, qu'un microcontroleur simple, c'est à dire une horloge, un compteur sur quelques bits, une mémoire dans laquelle est stocké l'incrément à appliquer au compteur à chaque cycle d'horloge, une table comportant un certain nombre de points de référence, et un lecteur de cette mémoire qui est prévu pour changer de point dans la table à chaque changement d'état d'un bit donné du compteur.

Chacun de ces éléments est particulièrement simple et se trouve dans la plupart des microcontroleurs actuels ayant les coûts les plus faibles.

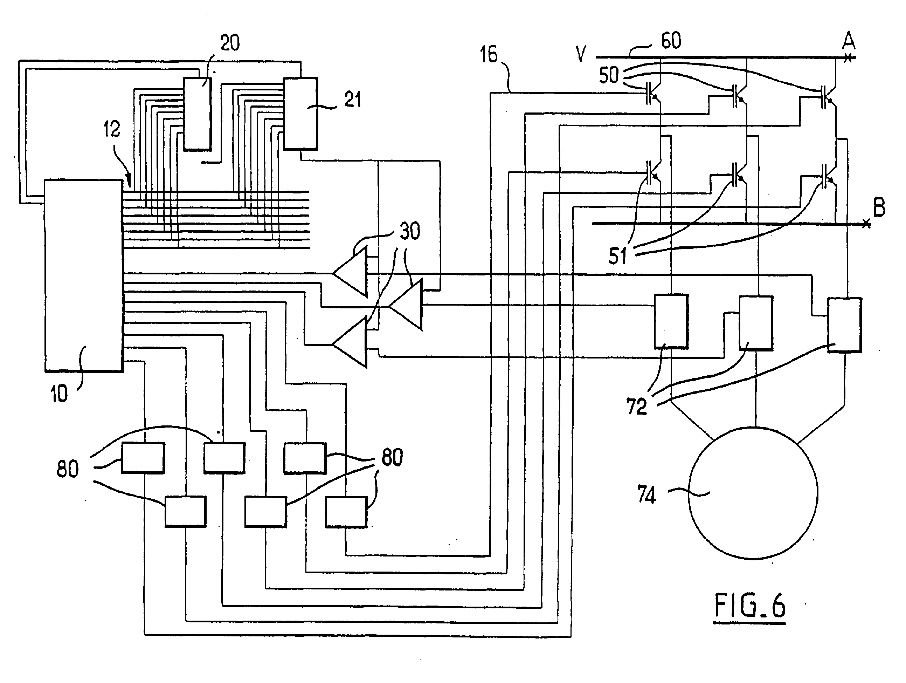

On a représenté à la figure 6 un circuit d'alimentation pour moteur électrique triphasé 74.

Ce circuit reprend les éléments essentiels du circuit précédent, dans une disposition adaptée pour une alimentation triphasée sur trois branches, chaque branche étant asservie en courant sur la base d'un signal de référence parmi trois signaux périodiques déphasés entre eux.

Ainsi, le présent circuit comporte trois branches munies chacune de deux transistors 50 et 51 en série entre une ligne continue à la tension V et la masse, et les trois bornes du moteur 74 sont connectées à chaque fois entre les deux transistors 50 d'une des trois branches.

Le présent circuit d'alimentation comprend en effet sur chaque branche de commutation un second transistor 51 placé entre un point de connection vers la charge 74 et la masse, et commandé également par le microcontroleur 10, de telle façon qu'il présente l'état opposé de celui du commutateur 50 de la même branche.

Les commutations de deux transistors 50 et 51 d'une même branche sont quasiment synchronisées, en respectant cependant un temps mort entre les commutations correspondantes, pendant lequel temps mort les deux transistors 50 et 51 sont tous deux bloquants, pour éviter un court circuit entre la ligne à courant continu et la masse.

Chaque branche voit ses deux commutateurs 50 et 51 commandés par le microcontroleur 10 en fonction d'une différence entre un signal de référence et un signal correspondant à l'une des phases, mesuré sur le moteur. Pour chacune des trois branches, le résultat de cette comparaison est établi par un parmi trois comparateurs analogiques 30, le comparateur en question correspondant à cette branche.

Ainsi le circuit présente trois comparateurs 30 recevant chacun sur ses deux entrées, un signal multiplexé de référence correspondant à la concaténation de morceaux de trois signaux de référence, correspondant respectivement aux trois branches, généré par le microcontroleur 10 et un signal prélevé sur une phase du moteur 74 par l'intermédiaire d'un capteur de courant 72 placé en série avec la borne correspondante de cette phase.

Ces trois comparateurs 30 fournissent chacun un résultat indiquant le signe de la différence entre les deux signaux comparés.

En fonction des résultats lus régulièrement par le microcontroleur 10, ce dernier commande, de la même façon que précédemment décrit, les commutateurs 50, 51 de chacune des branches, en veillant au respect du temps mort précédemment mentionné.

Le présent microcontroleur 10 voit sa sortie 12 connectée par un bus de données à deux convertisseurs numérique/analogique 20 et 21 dont chacun réalise un traitement particulier.

Le présent microcontroleur fournit sur sa sortie 12 une sinusoïde à fréquence variable, selon le procédé avantageux décrit précédemment.

Il fournit également sur le convertisseur 20 une valeur numérique représentant un facteur à appliquer à l'amplitude de cette sinusoïde de référence avant de la transmettre aux comparateurs 30.

Le convertisseur 21 reçoit du microcontroleur 10 la sinusoïde à laquelle il applique ce facteur d'amplitude.

Le convertisseur 21 réalise en outre un muliplexage particulier de cette sinusoïde de référence.

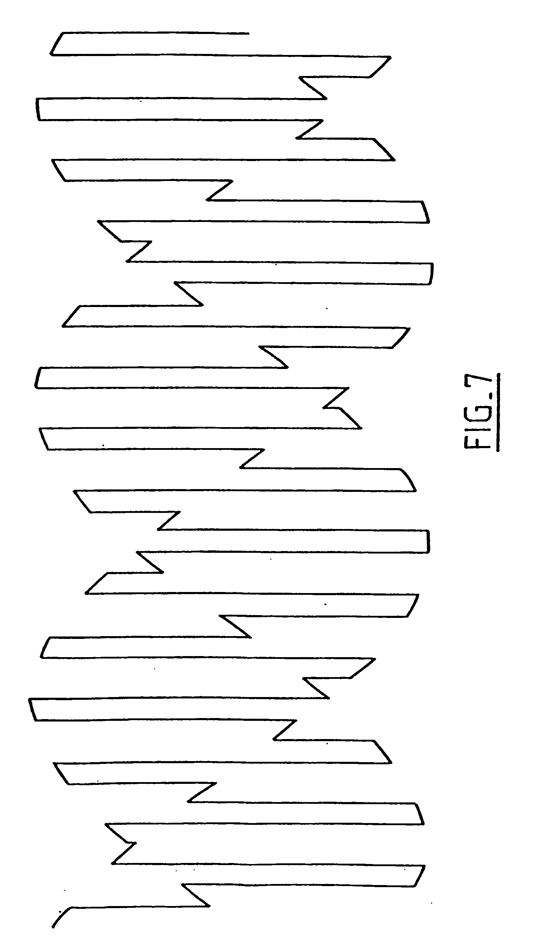

Ainsi il fournit, à partir de cette dernière, un signal tel que celui représenté à la figure 7, consistant en une série de morceaux de signaux prélevés alternativement sur trois signaux identiques à la courbe de référence, mais décalés entre eux de 120 degrés.

Ainsi, le signal fourni en sortie du convertisseur 21 est décomposé en intervalles du temps, consistant chacun en un morceau de signal emprunté alternativement à chacun de ces trois signaux à l'instant considéré.

Entre deux intervalles où la courbe de sortie reproduit une même des trois sinusoïdes de référence, la courbe de sortie reproduit les deux autres courbes.

Entre ces deux intervalles où la courbe de sortie reproduit une même des trois sinusoïdes, cette même sinusoïde a progressé d'une durée correspondant à l'affichage des morceaux des deux autres sinusoïdes. La courbe de sortie reprend donc cette troisième sinusoïde au point ou elle se trouve. Le signal de sortie du convertisseur 21 présente donc la forme de trois sinusoïdes entrelacées, et raccordées entre elles à chaque extrémité d'intervalle, par un segment vertical.

Cette même courbe de sortie est transmise en permanence sur chacun des comparateurs 30, de sorte que chaque comparateur 30 délivre en sortie un résultat saccadé, puisqu'il compare le signal prélevé avec successivement et alternativement chacune des trois sinusoïdes.

On programme le microcontroleur 10 pour qu'il ne prélève le résultat d'un comparateur donné qu'au moment où ce dernier compare le signal prélevé sur sa branche avec la bonne sinusoïde parmi les trois, celle correspondant à cette branche.

Une telle synchronisation du prélèvement en fonction de l'intervalle considéré du signal reçu est aisément mise en oeuvre dans le microcontroleur 10 du fait que c'est lui qui à la fois donne au convertisseur 21 l'ordre de changer de signal de référence à délivrer en sortie, et détermine l'instant du prélèvement.

Le microcontroleur 10 ne prélève sur chaque comparateur 30 que le résultat de la comparaison avec la bonne sinusoïde, celle que l'on souhaite retrouver sur la phase du moteur correspondant à ce comparateur, celle de la branche dont le microcontroleur 10 commande les commutateurs 50 et 51 en fonction de la comparaison considérée.

On bénéficie donc d'un multiplexage simple, et d'une comparaison à chaque commutation pour vérifier que celle-ci est bien nécessaire, tout en mettant en oeuvre un multiplexage efficace avec des moyens de calcul simples et peu coûteux.

Dans l'art antérieur, on a proposé des circuits pour générer une intensité sinusoïdale à partir d'une tension découpée qui oscille entre un niveau haut à une tension V et un niveau bas à tension nulle.

La valeur de la tension moyenne dans la charge (qui lisse le signal) dépend alors directement du rapport cyclique de la tension à l'instant considéré. Ainsi, on obtient une tension égale à V/2 pour une durée égale des créneaux hauts et des créneaux bas de la tension découpée, et supérieure ou inférieure à V/2 selon que les créneaux hauts ou les créneaux bas sont les plus longs.

On obtient donc typiquement un signal périodique autour de la valeur moyenne V/2. L'amplitude du signal obtenue, dont on voudrait qu'elle atteigne V/2, reste limitée par le fait que la charge se voit connectée par une de ses bornes entre deux commutateurs, l'un relié à la source à la tension V, et l'autre à la masse, et que les commutations synchronisées de ces deux commutateurs sont décalées l'une de l'autre d'un temps mort visant à éviter un court-circuit entre la source à V et la masse.

Dans le présent dispositif où l'on asservit le découpage sur l'intensité et où les commutations des commutateurs 50 et 51 sont commandées à chaque cycle du microcontroleur 10, en fonction d'une différence entre l'intensité attendue et l'intensité réelle, on observe que le dispositif applique une tension moyenne sur la charge qui est une tension sinusoïdale décalée vers la tension zéro.

Le présent dispositif ne changeant l'état des commutateurs 50 et 51 que si nécessaire, et ne produisant de tels changements qu'à des intervalles choisis, le dispositif produit une tension la plus basse parmi celles compatibles avec l'obtention de l'intensité souhaitée.

On observe donc ici, comme représenté à la figure 5, une sinusoïdale tangeante par son minimum à la tension zéro.

Ainsi donc, la courbe de tension peut être décalée en ordonnée du fait que cette tension est créée par des commutations chacune réèllement nécessaire et non-prédeterminée en référence à un rapport cyclique centré.

Cette sinusoïdale voit son point d'inflexion augmenter lorsque l'amplitude est accrue, jusqu'à atteindre la tension moyenne V/2 lorsque l'amplitude de cette sinusoïdale atteint la valeur maximale V/2, ce qui est rendu possible ici par le fait que les commutations des transistors 50 et 51 sont très peu gênées par les temps mort, ces temps mort n'apparaissant qu'aux commutations, qui sont ici rendues aussi peu fréquentes que possible (commutation seulement en réponse à un écart au signal de référence).

Ainsi, les limitations habituelles en amplitude sont évitées par le fait que les temps morts sont évités au maximum, les commutations étant réduites au seuls commutations nécessaires pour la précision souhaitée.

Grâce au décalage en ordonnée vers les tensions basses, les commutateurs situés entre la source de tension continue et la charge sont nettement plus souvent ouverts que fermés, et sont donc moins fréquemment parcourus par un courant, de sorte qu'ils s'échauffent moins. Plus globalement, le décalage des tensions vers le bas permet d'obtenir un meilleur rendement énergétique.

Le circuit de la figure 6 présente en outre, entre chaque sortie du microcontroleur 10 pour la commande d'un commutateur, et le commutateur associé, un circuit 80 d'amortissage de la commande, appelé également par la suite circuit de contrôle et d'isolation.

Les transistors utilisés ici sont des IGBT (insulated Gate Bipolar Transistor) dont la borne de commande se comporte comme un condensateur.

La tension de commande d'un transistor IGBT est appliquée entre sa grille et son émetteur. Le potentiel de l'émetteur pouvant être flottant, cette tension provient en général d'une alimentation isolée et la commande passe par un circuit spécialisé comportant un optocoupleur et un driver (unité de commande).

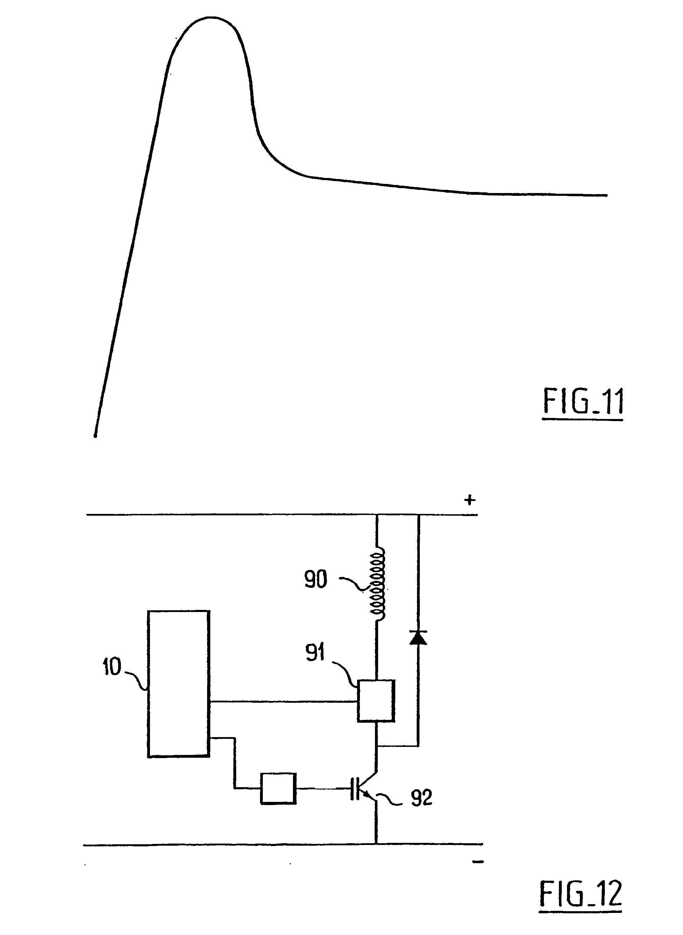

A la figure 11, on a représenté une évolution de la tension aux bornes d'un transistor IGBT lorsqu la tension de commande chute brutalement. On y distingue bien l'apparition d'une surtension.

Pour éviter l'échauffement du transistor lorsqu'il est utilisé en commutation il faut le faire changer d'état rapidement avec néanmoins une limitation en vitesse dans le sens du blocage pour éviter la surtension.

Une méthode simple consiste à intercaler une résistance entre le driver et la grille du transistor IGBT. Cette méthode a le défaut d'augmenter les temps de commutations dans le sens de l'ouverture comme dans le sens de la fermeture.

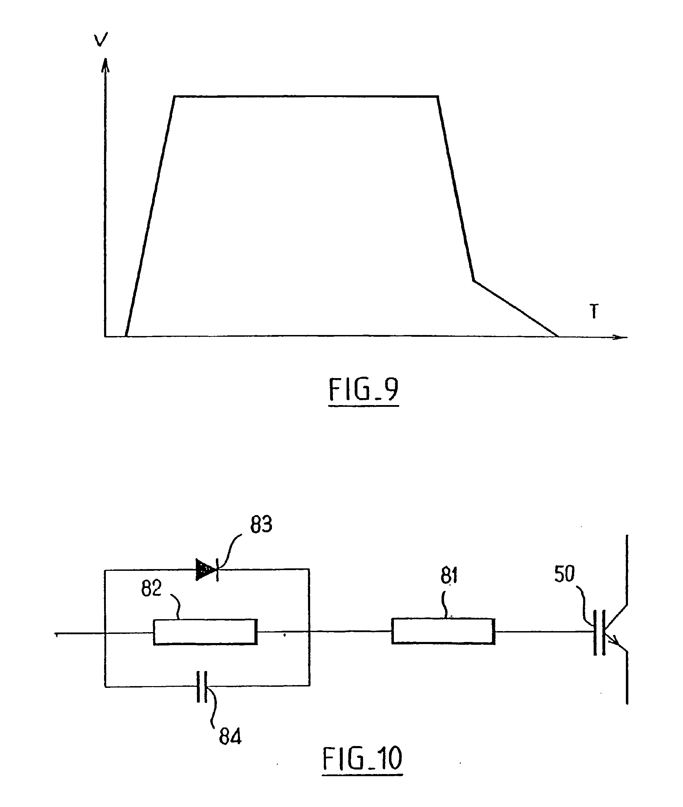

La tension de commande idéale pour un transistor IGBT utilisé en commutation est représentée sur la courbe de la figure 9.

La pente de montée est très raide, une première pente de descente raide fait chuter la tension de commande jusqu'à un niveau où le transistor devient résistif, une deuxième pente de descente plus douce bloque le transistor progressivement pour limiter la surtension. Il a été proposé des assemblages de transistors pour obtenir ces trois pentes mais cette solution est complexe.

Dans l'invention ces trois pentes sont réalisées par un circuit 80 fiable et peu coûteux comprenant deux résistances 81 et 82, une diode 83 et un condensateur 84, représenté à la figure 10.

Ce circuit présente, de la sortie de commande du microcontroleur vers la borne de commande du transistor, ici le transistor 50, d'abord trois branches parallèles portant respectivement la résistance 82, la diode 83 montée passante du microcontroleur 10 vers le transistor 50, et le condensateur 84. Après ces trois branches parallèles, se trouve en série une résistance 81 reliée au transistor 50.

La diode 83 court-circuite la résistance 82 pendant la montée, dont la pente est fixée par la résistance 81, d'où une pente rapide.

Au commencement de la descente le condensateur 84 fait chuter rapidement la tension sur la grille du transistor 50 puis les charges électriques sont évacuées lentement à travers la résistance 82 qui fixe la pente de la fin de la courbe, la diode 83 étant bloquée.

La position du point d'inflexion est fixée par le rapport entre la capacité de la grille du transistor 50 et celle du condensateur 84. La courbe obtenue est proche de l'idéale et il a été possible d'obtenir expérimentalement des temps de commutation plus courts que ceux rencontrés usuellement sans surtension notable.

On notera qu'ici, les transistors IGBT 50 et 51 incluent chacun une diode de roue libre parallèle.

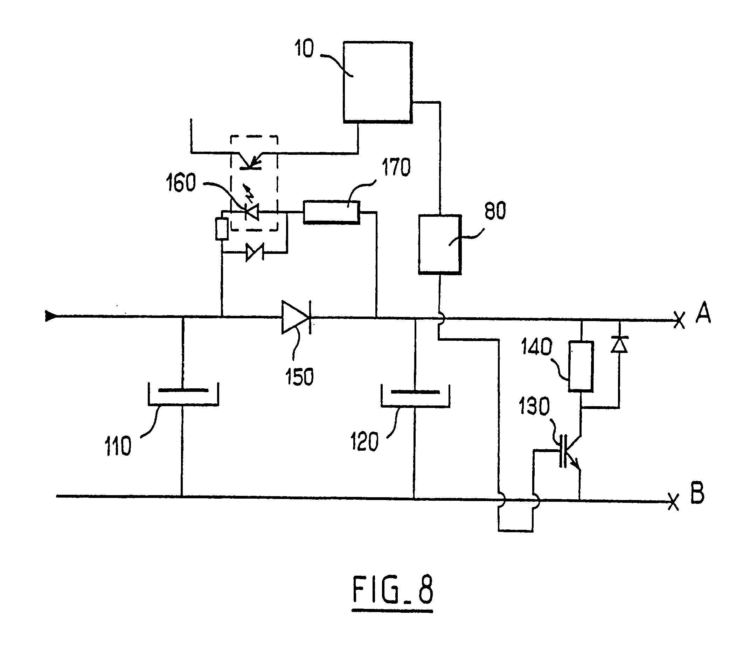

On dispose également, entre la ligne continue à la tension V et la masse, ici entre deux bornes A et B, le circuit représenté à la figure 8.

Ce circuit présente quatre bornes, dont deux bornes aval par rapport au sens d'alimentation sont connectées aux bornes A et B représentées sur la figure 8, c'est à dire respectivement à la borne positive A de chacun des commutateurs 50 de liaison avec la ligne continue, et à la masse B.

Les deux autres bornes C et D de ce circuit sont connectées, en partie amont de ce circuit, sur la source de tension continue et sur la masse (la source de tension continu peut par exemple être un redresseur monté sur un réseau d'alimentation triphasé).

Ce circuit comprend trois branches destinées à être placées parallèlement aux branches de commutation portant les commutateurs 50 et 51.

Deux de ces trois branches portent respectivement un condensateur 110 et 120, la troisième branche portant en série un transistor 130 et une résistance 140.

Deux bornes correspondantes des deux branches portant les condensateurs 110 et 120 sont reliées par une diode 150 montée passante dans le sens allant de la source vers les branches de commutation.

Ces deux bornes des deux branches sont également reliées, en parallèle de la diode 150, par une branche portant en série une diode électroluminescente 160 et une résistance 170.

Cette diode 160 est elle montée passante dans le sens allant des branches de commutation vers la source de tension continue.

Une diode zener de protection de cette diode électroluminescente 160 est placée en parallèle à cette dernière, à laquelle elle est reliée coté source par une résistance. Cette dernière résistance limite le courant dans la diode zener. Un condensateur supplémentaire peut être placé aux bornes de la diode zener pour améliorer la tenue aux tensions transitoires.

Grâce à ce circuit, lorsque le moteur électrique est en mode frein, autrement dit lorsqu'il est générateur, fournissant une intensité vers la source, la diode 150 devient bloquante et un courant remontant en direction de la source s'installe dans la diode électroluminescente 160, correspondant à des changements de charge des deux condensateurs 110 et 120. La diode 160 s'allume alors.

Cette diode est ici une diode optocouplée au microcontroleur 10, qui, en réponse à l'allumage de la diode 160, commande la fermeture du transistor 130 reliant les borne positive des branches de commutation à la masse en faisant passer le courant à travers une résistance 140.

Cette résistance 140 élimine alors par effet joule l'énergie fournie par le moteur. Le fait que ce commutateur 130 de branche d'élimination soit commandé par le microcontroleur 10 permet d'en contrôler la durée de fermeture. Ainsi, le microcontroleur, à la détection du mode frein, ferme le commutateur 130 pendant un durée qui dépasse l'instant où le courant reprend le sens allant de la source vers le moteur.

On évite ainsi une commutation à trop grande fréquence du transistor 130 dans le cas de changements de sens fréquents, qui l'endommagerait rapidement.

Avantageusement, le microcontroleur 10 comporte sur sa sortie de commande reliée au transistor 130, entre cette sortie et ce transistor, un circuit d'amortissement 80 similaire aux circuits 80 placés entre le microcontroleur 10 et les commutateurs 50, 51 d'alimentation de la charge 74.

En outre, on place avantageusement la résistance 140 côté source par rapport au commutateur 130, et on place avantageusement une diode de roue libre en parallèle de la résistance 140, montée passante de la borne de cette résistance 140 qui est la plus éloignée de borne d'alimentation à tension positive vers la borne à la tension continue d'alimentation.

Ce circuit constitue un convertisseur de fréquence formant un générateur triphasé avec lequel des variations de résistance rotorique n'ont pas d'effet sur le couple du moteur. La rotation est régulière y compris pour des fréquences aussi basses que 0.25 Hz. La tension du bus continu n'a d'effet que sur la fréquence maximale.

La présente invention permet la réalisation d'un générateur de signaux périodiques économique car ne nécessitant pas de calculateur et souple avec un asservissement sur une grandeur externe simple car intégré.

Le signal périodique à générer est mémorisé dans une table interne à un micro contrôleur. Le micro contrôleur envoie à un convertisseur digital analogique le signal périodique échantillonné à un intervalle régulier proportionnel à la fréquence désirée.

La tension analogique issue de ce convertisseur est appliquée à une entrée d'un comparateur. La deuxième entrée de ce comparateur est reliée à un dispositif de mesure du signal généré. Le micro contrôleur lit le résultat de la comparaison et déclenche ou maintien la commutation si le signal mesuré est inférieur à celui attendu. Lorsque le signal est supérieur le microcontrôleur stoppe ou maintient inactive la commutation. La commutation est donc à fréquence et largeur d'impulsions variable. Elle est asservie au signal obtenu. Les corrections de comportements sont automatiques.

Les circuits décrits précédemment sont avantageusement utilisés pour alimenter une boucle inductive, constituant avec cette boucle inductive une source d'énergie sans contact. Un dispositif muni de moyens pour transformer des variations de champ magnétique en un courant d'alimentation vient alors prélever cette énergie, sans contact. Les précédents circuits sont avantageux pour une telle application en ce qu'ils permettent un asservissement en courant aisément mis en oeuvre, qui s'avère particulièrement avantageux dans ces applications.

Selon des variantes, les alimentations basse tension des circuits de contrôle, microcontroleur, comparateurs par exemple, sont obtenues directement ou indirectement par découpage de la tension continue principale.

Selon d'autres applications des circuits précédemment décrits, ils peuvent être utilisés pour alimenter un moteur d'enroulage de produits longs tels que des câbles ou pour alimenter un frein de moteur du type à alimentation par courant continu basse tension, ce frein étant alimenté par découpage de la tension continue principale.

On a représenté à la figure 12 un circuit de montage d'un tel frein. Un tel frein se compose d'une bobine de frein 90, montée entre la source de tension continue et la masse, sur une branche portant en série cette bobine 90, un capteur de courant 91 et une transistor de commande 92. Le capteur de courant 91 fournit au microcontroleur 10 un signal indicatif de la valeur du courant traversant la bobine 90, et le microcontroleur 10 commande les commutations du transistor 92 de façon à obtenir le courant souhaité dans la bobine 90. Un tel circuit est avantageusement associé au circuit de la figure 6 pour freiner le moteur 74 notamment lors d'une coupure ou d'une chute de la tension de la source continue. On notera également que ce circuit inclut une diode de roue libre s'étendant d'un point situé en aval de la bobine et retournant sur la source de tension continue, formant ainsi une boucle qui englobe la bobine 90 et le capteur 91.

Ce circuit permet ainsi le contrôle de l'enroulement lors de la suppression de la tension du réseau. Dans le cas d'un enrouleur de cable électrique cela permet de protéger le câble lors de ce type d'incident.

On peut ainsi garder le contrôle jusqu'à une tension aussi basse que 100V.

Un dispositif d'identification de produits, décrit précédemment dans le cas de l'alimentation d'une boucle inductive, peut également être réalisé en associant un générateur selon l'invention avec une charge incluant deux plaques capacitives

Un générateur selon l'invention est également avantageusement utilisé pour faire passer un nombre de charge prédéterminés pour un dépôt par galvanoplastie, ou encore pour la charge de batteries.

Le générateur est avantageusement utilisé chaque fois qu'il faut asservir une des deux grandeurs électriques intensité ou tension et la mesure de la deuxième apporte une information utilie à la bonne fin du procédé par exemple la charge de batterie, les dépôts électrochimiques, ceci notamment en courant continu.

Le générateur est avantageusement utilisé chaque fois qu'il faut asservir une des trois grandeurs électriques intensité ou tension ou réquence et que la mesure d'une ou des autres grandeurs apporte une information utile à la bonne fin du procédé en courant périodique, par exemple pour l'identification des métaux.

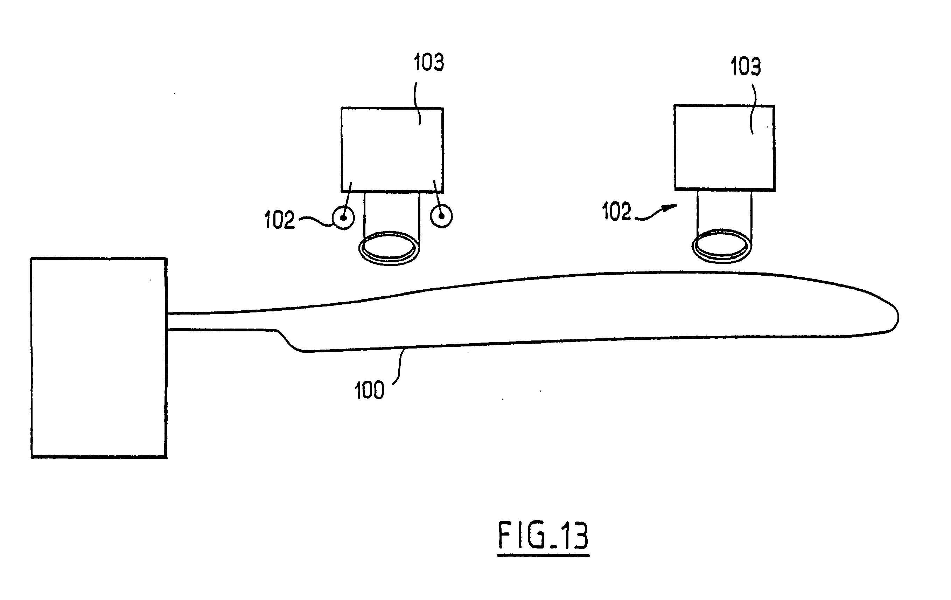

Selon une variante représentée sur la figure 13, le générateur alimente une boucle inductive 100 de forme allongée destinée à être couplée pas son champs électromagnétique avec un ou des récepteurs 102 solidaires de mobiles 103 se déplaçant parallèlement à la boucle inductive 100 dans la direction de sa longueur.

## Revendications

1. Générateur de signal comprenant des moyens de génération d'au moins un signal de référence sinusoïdal, au moins constitué par un calculateur logique (10), au moins un commutateur de découpage (50, 51), au moins un capteur (70) pour prélever au moins un signal généré en réponse aux commutations dudit au moins un commutateur de découpage (50,51), au moins un comparateur(s) (30) pour établir une comparaison entre ledit au moins un signal prélevé et ledit au moins un signal de référence sinusoïdal, le calculateur logique (10) formant moyen de commande dudit au moins un commutateur de découpage (50,51) prévu pour délivrer sur ledit au moins un commutateur (50,51) un ou des niveau(x) de commande (16) qui est ou sont fonction(s) du ou des résultat(s) de cette comparaison ou de ces comparaison(s), **caractérisé en ce que** le calculateur logique (10) comporte une ou des entrée(s) recevant le ou les résultat(s) de la ou des comparaison(s) depuis ce dit au moins un comparateur(s) (30), ledit calculateur logique (10) comprenant en outre une entrée pour recevoir une fréquence souhaitée pour le signal de référence sinusoïdal, et **en ce que** le calculateur logique (10) est programmé pour actualiser à des instants prédéterminés en fonction de la fréquence souhaitée le(s) niveau(x) de commande délivré(s) au(x) commutateur(s) de découpage (50,51) en fonction du ou des résultat(s) de comparaison(s) reçu(s).

2. Générateur selon la revendication 1, **caractérisé en ce que** le calculateur logique (10) est programmé pour actualiser le ou les niveau(x) de commande délivrés à des intervalles de temps réguliers.

3. Générateur selon la revendication 1 ou la revendication 2, **caractérisé en ce que** le calculateur logique (10) inclut une horloge, des moyens pour déclencher les actualisations de l'état d'un commutateur à des instants indexés sur cette horloge, **en ce que** le calculateur inclut des moyens pour délivrer une série de valeurs de référence, successivement en tant que signal de référence et **en ce que** les moyens pour délivrer successivement les valeurs de référence sont programmés pour passer d'une valeur de référence à une autre de manière indexée sur la même horloge que celle sur laquelle sont indexées les actualisations de l'état du commutateur.

4. Générateur selon l'une quelconque des revendications précédentes, **caractérisé en ce que** le calculateur logique inclut des moyens pour délivrer une série de valeurs de référence successivement en tant que signal de référence et **en ce que** ces moyens sont prévus pour délivrer une valeur à intervalles de temps réguliers.

5. Générateur selon l'une quelconque des revendications précédentes, **caractérisé en ce que** le calculateur logique inclut des moyens pour délivrer régulièrement une valeur de référence sur une sortie du calculateur, de manière à former un signal de référence, ces moyens étant aptes à délivrer plusieurs fois de suite une même valeur, et **en ce que** le calculateur logique inclut des moyens pour déclencher un passage d'une valeur à une valeur suivante en tant que valeur de référence à délivrer, ces derniers moyens étant prévus pour déclencher un tel passage de manière plus ou moins fréquente en fonction d'une valeur reçue sur une entrée du calculateur.

6. Générateur selon l'une quelconque des revendications précédentes, **caractérisé en ce que** le calculateur logique comporte des moyens pour compter le nombre d'apparitions d'un état donné du commutateur pendant un intervalle de temps donné.

7. Générateur selon l'une quelconque des revendications précédentes, **caractérisé en ce que** le calculateur logique (10) comprend des moyens pour déterminer un intervalle de temps pendant lequel intervient un nombre d'apparitions donné d'un état donné du commutateur (50, 51).

8. Générateur selon la revendication 6, **caractérisé en ce que** le calculateur comporte des moyens pour compter un nombre d'apparitions d'un état donné du commutateur survenues sur une période correspondant à la présence d'une partie prédéterminée du signal de référence.

9. Générateur selon l'une quelconque des revendications précédentes, **caractérisé en ce que** le calculateur logique (10) inclut des moyens pour délivrer régulièrement une valeur de référence sur une sortie du calculateur de manière à former un signal de référence, une horloge, une série de bits sur laquelle est stockée une valeur numérique, des moyens pour incrémenter cette valeur numérique de manière régulière indexée sur l'horloge, et des moyens pour déterminer l'incrément à appliquer régulièrement en fonction d'une valeur reçue sur une entrée du calculateur logique, le calculateur comportant en outre des moyens pour déclencher le passage d'une valeur de référence à une valeur de référence suivante en tant que valeur de référence à délivrer à chaque fois qu'un bit prédéterminé de la série de bits change d'état.

10. Générateur selon l'une quelconque des revendications précédentes, **caractérisé en ce qu'**il comporte, en sortie du calculateur logique (10), au moins un convertisseur numérique/analogique (20, 21) et, en sortie de ce convertisseur (20, 21), un comparateur (30) recevant sur sa première entrée la signal de sortie de ce convertisseur (20, 21), et sur sa seconde entrée, le signal prélevé.

11. Générateur selon la revendication précédente, **caractérisé en ce qu'**il comporte deux convertisseurs numérique / analogique (20, 21) placés en sortie du calculateur logique (10), dont l'un (20) reçoit du calculateur logique (10) une valeur numérique définissant une amplitude de courbe de référence, et l'autre (21) reçoit du calculateur logique (10) une suite de points définissant une forme de courbe de référence, cet autre convertisseur (21) numérique/analogique recevant également du premier convertisseur (20) la valeur de l'amplitude, qu'il applique à la courbe avant de la transmettre vers un comparateur (30).

12. Générateur selon l'une quelconque des revendications précédentes, **caractérisé en ce qu'**il comporte plusieurs branches d'alimentation (50, 51) portant chacune au moins un commutateur respectif commandé par le calculateur logique (10), et au moins un comparateur (30) entre un signal de référence et un signal prélevé sur une branche (50, 51) considérée, le résultat de la comparaison étant utilisé par le calculateur logique (10) pour commander l'état du commutateur de la branche considérée.

13. Générateur selon la revendication précédente, **caractérisé en ce qu'**il comporte des moyens (10, 20, 21) pour générer sur ledit au moins un comparateur (30) un signal ayant la forme d'une série d'intervalles alternés qui correspondent à plusieurs signaux de référence correspondant chacun à une branche et **en ce que** le calculateur logique (10) est prévu pour ne prendre en compte, pour la commande d'une branche considérée, le résultat de la comparaison que pour des intervalles de temps où le comparateur (30) reçoit un intervalle d'un signal de référence correspondant à cette branche (50, 51).

14. Générateur selon l'une quelconque des revendications précédentes, en combinaison avec la revendication 6, la revendication 7, ou la revendication 8, **caractérisé en ce que** le signal commuté et le signal de référence représentent chacun une grandeur respective parmi la tension et l'intensité dans une charge (74) placée en sortie du générateur et **en ce qu'**il comporte des moyens pour fournir, en fonction du nombre d'apparitions compté pendant un intervalle de temps donné d'un état donné du commutateur (50, 51), ou de l'intervalle de temps mesuré nécessaire à un nombre d'apparitions donné d'un état donné du commutateur, une indication ou une détection des distorsions entre l'intensité ou la tension commutée par le commutateur (50, 51) et respectivement la tension ou l'intensité de référence.

15. Générateur selon l'une quelconque des revendications précédentes, **caractérisé en ce que** le commutateur (50,51) est prévu pour être placé de manière intermédiaire entre une source de tension et la masse, et destiné à être associé à une première charge entre cette source de tension et la masse, **en ce que** le générateur inclut un commutateur supplémentaire (130) entre la source et la masse associé à une charge de dissipation, ainsi qu'un capteur de courant (160) constitué d'une diode placée pour détecter un courant sortant de ladite première charge (74) et contraire à celui généré par le générateur, et des moyens pour déclencher une commutation du commutateur supplémentaire (130) à la détection d'un tel courant contraire de manière à faire circuler un courant dans la charge de dissipation, ces moyens de détection et de déclenchement incluant un calculateur logique (10).

16. Générateur selon la revendication 15, **caractérisé en ce que** les moyens de détection dudit courant contraire incluent un capteur de courant (160) qui est une diode à optocouplage, couplée avec le calculateur logique (10).

17. Générateur selon l'une des revendications 15 ou 16, **caractérisé en ce que** le moyen de déclenchement est le calculateur logique (10) qui est prévu pour générer la courbe de référence.

18. Générateur selon l'une quelconque des revendications 15 à 17, **caractérisé en ce qu'**il inclut une première diode (150) montée passante d'une source de tension vers le commutateur (50,51) d'alimentation, et **en ce que** le capteur de courant (160) est une diode émettrice placée en parallèle de cette première diode (150), dans le sens allant du commutateur d'alimentation (50, 51) vers la source.

19. Générateur selon l'une quelconque des revendications 15 à 18, **caractérisé en ce qu'**il inclut une diode (150) montée passante de la source vers le commutateur (50, 51), et deux condensateurs (110,120) ayant chacun leur première borne reliée à une borne respective de la diode (150), et leur seconde borne reliée à la masse.

20. Dispositif comprenant un moteur électrique et un générateur d'alimentation de ce moteur, **caractérisé en ce que** ce générateur est conforme à l'une quelconque des revendications 1 à 19.

21. Dispositif selon la revendication 20, **caractérisé en ce qu'**il inclut un moyen de freinage inductif (90, 91,92) du moteur, et **en ce que** le calculateur logique (10) est prévu pour commander ce moyen de freinage (90,91,92) à l'aide dudit au moins un signal généré en réponse aux commutations dudit au moins un commutateur.

22. Dispositif selon la revendication 21, **caractérisé en ce que** ledit au moins un capteur étant un dispositif de mesure de courant.

23. Dispositif selon la revendication 21 ou la revendication 22, en combinaison avec la revendication 6 ou la revendication 7, **caractérisé en ce que** le calculateur inclut des moyens pour déduire d'un nombre d'apparitions de l'état activé dans un intervalle de temps donné ou d'un intervalle de temps nécessaire à un nombre donné d'apparitions d'un état activé du frein inductif, la bonne marche de ce frein, et délivrer un signal indicateur de cette bonne marche.

24. Dispositif d'enroulement de produits longs incluant un moteur électrique (74) et un générateur d'alimentation de ce moteur, **caractérisé en ce que** le générateur est conforme à l'une quelconque des revendications 1 à 19.

25. Dispositif de freinage inductif comprenant un élément inductif et un générateur d'alimentation de cet élément inductif, **caractérisé en ce que** le générateur est conforme à l'une quelconque des revendications 1 à 19.

26. Dispositif générateur incluant un générateur selon l'une quelconque des revendications 1 à 19, et une boucle inductive (100) connectée en sortie du générateur et destinée à alimenter en champs magnétique variable un dispositif (102,103) muni de moyens générateurs de courant en réponse à ce champ magnétique variable.

27. Dispositif selon la revendication précédente, **caractérisé en ce qu'**il inclut une boucle inductive (100) de forme allongée destinée à être couplée pas son champs électromagnétique avec un ou des récepteurs (102) solidaires de mobiles (103) se déplaçant parallèlement à la boucle inductive (100) dans la direction de sa longueur.

28. Dispositif de détection de présence d'objets d'un type choisi, comprenant une boucle inductive (74), des moyens d'alimentation (10, 50, 51) de la boucle (74) et des moyens de détection (10) de variation d'inductance aux bornes de la boucle (74) en réponse à la présence d'objets devant cette boucle (74), les moyens d'alimentation et de détection étant constitués par un dispositif générateur conforme à la revendication 14.

## Claims

1. Signal generator comprising means for generating at least one sinusoidal reference signal, at least consisting of a logic computer (10), at least one cutoff switch (50, 51), at least one sensor (70) for tapping off at least one signal generated in response to switchings of said at least one cutoff switch (50, 51), at least one comparator(s) (30) for establishing a comparison between said at least one tapped-off signal and said at least one sinusoidal reference signal, the logic computer (10) forming a means of control of said at least one cutoff switch (50, 51) provided so as to deliver on said at least one switch (50, 51) one or more control level(s) (16) which is or are dependent on the result(s) of this comparison or these comparison(s), **characterized in that** the logic computer (10) comprises one or more input(s) receiving the result or results of the comparison or comparisons from this said at least one comparator(s) (30), said logic computer (10) furthermore comprising an input for receiving a desired frequency for the sinusoidal reference signal, and **in that** the logic computer (10) is programmed so as to update at predetermined instants as a function of the desired frequency the control level(s) delivered to the cutoff switch(es) (50, 51) as a function of the comparison result or results received.

2. Generator according to Claim 1, **characterized in that** the logic computer (10) is programmed to update the control level (s) delivered at regular time intervals.

3. Generator according to Claim 1 or Claim 2, **characterized in that** the logic computer (10) includes a clock, means for triggering the updates of the state of a switch at instants indexed with regard to this clock, **in that** the computer includes means for delivering a series of reference values, successively as reference signal and **in that** the means for successively delivering the reference values are programmed so as to go from one reference value to another in a manner indexed with regard to the same clock as that with regard to which the updates of the state of the switch are indexed.

4. Generator according to any one of the preceding claims, **characterized in that** the logic computer includes means for delivering a series of reference values successively as reference signal and **in that** these means are designed to deliver a value at regular time intervals.

5. Generator according to any one of the preceding claims, **characterized in that** the logic computer includes means for regularly delivering a reference value on an output of the computer, in such a way as to form a reference signal, these means being able to deliver one and the same value several times in succession, and **in that** the logic computer includes means for triggering a transition from one value to a next value as reference value to be delivered, these last means being designed to trigger such a transition more or less frequently as a function of a value received on an input of the computer.

6. Generator according to any one of the preceding claims, **characterized in that** the logic computer comprises means for counting the number of occurrences of a given state of the switch during a given time interval.

7. Generator according to any one of the preceding claims, **characterized in that** the logic computer (10) comprises means for determining a time interval during which there is a given number of occurrences of a given state of the switch (50, 51).

8. Generator according to Claim 6, **characterized in that** the computer comprises means for counting a number of occurrences of a given state of the switch which have arisen over a period corresponding to the presence of a predetermined part of the reference signal.

9. Generator according to any one of the preceding claims, **characterized in that** the logic computer (10) includes means for regularly delivering a reference value on an output of the computer in such a way as to form a reference signal, a clock, a bit series over which is stored a digital value, means for incrementing this digital value in a regular manner indexed with regard to the clock, and means for determining the increment to be applied regularly as a function of a value received on an input of the logic computer, the computer furthermore comprising means for triggering the transition from a reference value to a next reference value as reference value to be delivered whenever a predetermined bit of the bit series changes state.

10. Generator according to any one of the preceding claims, **characterized in that** it comprises, at the output of the logic computer (10), at least one digital/analog converter (20, 21) and, at the output of this converter (20, 21), a comparator (30) receiving on its first input the output signal from this converter (20, 21), and on its second input the sampled signal.

11. Generator according to the preceding claim, **characterized in that** it comprises two digital/analog converters (20, 21) placed at the output of the logic computer (10), one of which (20) receives from the logic computer (10) a digital value defining a reference curve amplitude, and the other of which (21) receives from the logic computer (10) a succession of points defining a reference curve shape, this other digital/analog converter (21) also receiving from the first converter (20) the value of the amplitude, which it applies to the curve before transmitting it to a comparator (30).

12. Generator according to any one of the preceding claims, **characterized in that** it comprises several supply branches (50, 51) each carrying at least one respective switch controlled by the logic computer (10), and at least one comparator (30) between a reference signal and a signal sampled from a relevant branch (50, 51), the result of the comparison being used by the logic computer (10) to control the state of the switch of the relevant branch.

13. Generator according to the preceding claim, **characterized in that** it comprises means (10, 20, 21) for generating on said at least one comparator (30) a signal having the form of a series of alternating intervals which correspond to several reference signals each corresponding to a branch and **in that** the logic computer (10) is designed to disregard, for the control of a relevant branch, the result of the comparison except for time intervals where the comparator (30) receives an interval of a reference signal corresponding to this branch (50, 51).

14. Generator according to any one of the preceding claims, in combination with Claim 6, Claim 7 or Claim 8, **characterized in that** the switched'signal and the reference signal each represent a respective quantity from the voltage and the current strength in a load (74) placed at the output of the generator and **in that** it comprises means for providing, as a function of the number of occurrences counted during a given time interval of a given state of the switch (50, 51), or of the measured time interval required for a given number of occurrences of a given state of the switch, an indication or a detection of the distortions between the current strength or the voltage switched by the switch (50, 51) and respectively the reference voltage or current strength.

15. Generator according to any one of the preceding claims, **characterized in that** the switch (50, 51) is designed to be placed in an intermediate manner between a voltage source and the earth, and intended to be associated with a first load between this voltage source and the earth, **in that** the generator includes an additional switch (130) between the source and the earth and associated with a dissipation load, as well as a current sensor (160) consisting of a diode placed so as to detect an outgoing current leaving said first load (74) and contrary to that generated by the generator, and means for triggering a switching of the additional switch (130) upon the detection of such a contrary current in such a way as to cause a current to flow in the dissipation load, these means of detection and of triggering including a logic computer (10).

16. Generator according to Claim 15, **characterized in that** the means for detecting said contrary current include a current sensor (160) which is an optocoupling diode coupled with the logic computer (10).

17. Generator according to either of Claims 15 or 16, **characterized in that** the triggering means is the logic computer (10) which is designed to generate the reference curve.

18. Generator according to any one of Claims 15 to 17, **characterized in that** it includes a first diode (150) arranged so as to be passing from a voltage source to the supply switch (50, 51), and **in that** the current sensor (160) is an emitter diode placed in parallel with this first diode (150), in the direction going from the supply switch (50, 51) to the source.

19. Generator according to any one of Claims 15 to 18, **characterized in that** it includes a diode (150) arranged so as to be passing from the source to the switch (50, 51), and two capacitors (110, 120) each having their first terminal linked to a respective terminal of the diode (150), and their second terminal linked to earth.

20. Device comprising an electric motor and a supply generator for energizing this motor, **characterized in that** this generator is in accordance with any one of Claims 1 to 19.

21. Device according to Claim 20, **characterized in that** it includes a means of inductive braking (90, 91, 92) of the motor, and **in that** the logic computer (10) is designed to control this means of braking (90, 91, 92) with the aid of said at least one signal generated in response to the switchings of said at least one switch.

22. Device according to Claim 21, **characterized in that** said at least one sensor being a current measuring device.

23. Device according to Claim 21 or Claim 22, in combination with Claim 6 or Claim 7, **characterized in that** the computer includes means for deducing from a number of occurrences of the activated state in a given time interval or from a time interval required for a given number of occurrences of an activated state of the inductive brake, the proper functioning of this brake, and for delivering a signal indicative of this proper functioning.

24. Device for winding up long products including an electric motor (74) and a supply generator for energizing this motor, **characterized in that** the generator is in accordance with any one of Claims 1 to 19.

25. Inductive braking device comprising an inductive element and a supply generator for energizing this inductive element, **characterized in that** the generator is in accordance with any one of Claims 1 to 19.

26. Generator device including a generator according to any one of Claims 1 to 19, and an inductive loop (100) connected at the output of the generator and intended to supply under variable magnetic fields a device (102, 103) furnished with means for generating current in response to this variable magnetic field.

27. Device according to the preceding claim, **characterized in that** it includes an inductive loop (100) of elongate shape intended to be coupled via its electromagnetic field with one or more receivers (102) secured to mobiles (103) moving parallel to the inductive loop (100) in its length direction.

28. Device for detecting the presence of objects of a chosen type, comprising an inductive loop (74), supply means (10, 50, 51) for energizing the loop (74) and means of detection (10) of variation of inductance across the terminals of the loop (74) in response to the presence of objects in front of this loop (74), the supply and detection means consisting of a generator device in accordance with Claim 14.

## Patentansprüche

1. Signalgenerator umfassend Mittel zur Erzeugung von zumindest einem Referenzsinussignal zumindest bestehend aus einem Logikrechner (10), zumindest einem Umschalter zur Unterteilung (50, 51), zumindest einem Sensor (70) zum Abgreifen von zumindest einem Signal, das als Antwort auf die Umschaltungen des besagten zumindest einem Umschalters zur Unterteilung (50, 51) erzeugt wird, zumindest einem Komparator (30) zum Erstellen eines Vergleichs zwischen dem besagten zumindest einem abgegriffenen Signal und dem besagten zumindest einen Referenzsinussignal, wobei der Logikrechner (10) ein Mittel zur Steuerung des besagten zumindest einen Umschalters zur Unterteilung (50, 51) bildet, das vorgesehen ist, um am besagten zumindest einen Umschalter (50, 51) eine oder mehrere Steuerebene(n) (16) auszugeben, die eine oder mehrere Funktion(en) des Ergebnisses oder der Ergebnisse dieses Vergleichs oder dieser Vergleiche darstellt oder darstellen, **dadurch gekennzeichnet, dass** der Logikrechner (10) einen Eingang oder mehrere Eingänge aufweist, der oder die das Ergebnis oder die Ergebnisse des Vergleichs oder der Vergleiche von diesem besagten zumindest einen Komparator (30) empfängt oder empfangen, wobei der besagte Logikrechner (10) des Weiteren einen Eingang umfasst, um eine gewünschte Frequenz für das Referenzsinussignal zu empfangen, und **dadurch**, dass der Logikrechner (10) programmiert ist, um zu vorbestimmten Zeitpunkten in Abhängigkeit von der gewünschten Frequenz das Steuerergebnis oder die Steuerergebnisse, das oder die dem oder den Umschalter(n) zur Unterteilung (50, 51) entsprechend empfangenen Vergleichsergebnisses oder der empfangenen Vergleichsergebnisse übermittelt wird oder werden, zu aktualisieren.

2. Generator nach Anspruch 1, **dadurch gekennzeichnet, dass** der Logikrechner (10) programmiert ist, um die in regelmäßigen Zeitabständen abgegebene(n) Steuerebene(n) zu aktualisieren.

3. Generator nach Anspruch 1 oder 2, **dadurch gekennzeichnet, dass** der Logikrechner (10) einen Zeitgeber, Mittel zum Auslösen der Aktualisierungen des Zustandes eines Umschalters zu an diesem Zeitgeber indizierten Zeitpunkten umfasst, **dadurch**, dass der Rechner Mittel zum sukzessiven Ausgeben einer Reihe von Referenzwerten als Referenzsignal umfasst, und **dadurch**, dass die Mittel zum sukzessiven Ausgeben der Referenzwerte programmiert sind, um von einem Referenzwert zu einem anderen überzugeben, und dies auf indizierte Art und Weise am selben Zeitgeber wie derjenige, an dem die Aktualisierungen des Zustandes des Umschalters indiziert sind.

4. Generator nach einem der vorhergehenden Ansprüche, **dadurch gekennzeichnet, dass** der Logikrechner Mittel zum sukzessiven Ausgeben einer Reihe von Referenzwerten als Referenzsignal umfasst, und **dadurch**, dass diese Mittel vorgesehen sind, um in regelmäßigen Zeitabständen einen Wert auszugeben.

5. Generator nach einem der vorhergehenden Ansprüche, **dadurch gekennzeichnet, dass** der Logikrechner Mittel zum regelmäßigen Ausgeben eines Referenzwertes an einem Ausgang des Rechners umfasst, so dass ein Referenzsignal gebildet wird, wobei diese Mittel fähig sind, mehrere Male hintereinander einen selben Wert auszugeben, und **dadurch**, dass der Logikrechner Mittel zum Auslösen eines Übergangs von einem Wert zu einem nächsten Wert als auszugebender Referenzwert umfasst, wobei diese letzten Mittel dazu vorgesehen sind, um einen derartigen Übergang mehr oder weniger häufig in Abhängigkeit von einem an einem Eingang des Rechners empfangenen Wertes auszulösen.

6. Generator nach einem der vorhergehenden Ansprüche, **dadurch gekennzeichnet, dass** der Logikrechner Mittel zum Zählen der Anzahl von Erscheinungen eines gegebenen Zustands des Umschalters während eines gegebenen Zeitintervalls aufweist.

7. Generator nach einem der vorhergehenden Ansprüche, **dadurch gekennzeichnet, dass** der Logikrechner (10) Mittel zum Bestimmen eines Zeitintervalls, in dem eine gegebene Anzahl von Erscheinungen eines gegebenen Zustands des Umschalters (50, 51) auftreten, umfasst.

8. Generator nach Anspruch 6, **dadurch gekennzeichnet, dass** der Rechner Mittel zum Zählen einer Anzahl von Erscheinungen eines gegebenen Zustands des Umschalters, die in einer Periode aufgetreten sind, die der Anwesenheit eines vorbestimmten Teils des Referenzsignals entspricht, aufweist.

9. Generator nach einem der vorhergehenden Ansprüche, **dadurch gekennzeichnet, dass** der Logikrechner (10) Mittel zum regelmäßigen Ausgeben eines Referenzwertes an einem Ausgang des Rechners umfasst, so dass ein Referenzsignal gebildet wird, und einen Zeitgeber, eine Reihe von Bits, an der ein numerischer Wert gespeichert wird, sowie Mittel zum Inkrementieren dieses numerischen Wertes, und dies auf regelmäßige am Zeitgeber indizierte Art und Weise, und Mittel zum Bestimmen des regelmäßig anzuwendenden Inkrements in Abhängigkeit von einem an einem Eingang des Logikrechners empfangenen Wertes umfasst, wobei der Rechner des Weiteren Mittel zum Auslösen des Übergangs von einem Referenzwert zu einem nächsten Referenzwert als Referenzwert, der jedes Mal, wenn ein vorbestimmtes Bit der Bitreihe den Zustand ändert, auszugeben ist, enthält.

10. Generator nach einem der vorhergehenden Ansprüche, **dadurch gekennzeichnet, dass** er am Ausgang des Logikrechners (10) zumindest einen Digital-Analog-Konverter (20, 21) und am Ausgang dieses Umsetzers (20, 21) einen Komparator (30) aufweist, der an seinem ersten Eingang das Ausgangssignal dieses Umsetzers (20, 21) und an seinem zweiten Eingang das abgegriffene Signal empfängt.

11. Generator nach vorherigem Anspruch, **dadurch gekennzeichnet, dass** er zwei Digital-Analog-Konverter (20, 21) aufweist, die am Ausgang des Logikrechners (10) angeordnet sind, von denen der eine (20) vom Logikrechner (10) einen numerischen Wert empfängt, der eine Referenzkurvenamplitude definiert, und von denen der andere (21) vom Logikrechner (10) eine Folge von Punkten empfängt, die eine Referenzkurvenform definiert, wobei dieser andere Digital-Analog-Konverter (21) ebenfalls vom ersten Umsetzer (20) den Wert der Amplitude empfängt, die er an die Kurve anwendet, bevor er sie zu einem Komparator (30) überträgt.

12. Generator nach einem der vorhergehenden Ansprüche, **dadurch gekennzeichnet, dass** er mehrere Versorgungszweige (50, 51) aufweist, die jeweils zumindest einen jeweiligen Umschalter umfassen, der vom Logikrechner (10) gesteuert wird, und zumindest einen Komparator (30) zwischen einem Referenzsignal und einem an einem bestimmten Zweig (50, 51) abgegriffenen Signal umfasst, wobei das Ergebnis des Vergleichs vom Logikrechner (10) verwendet wird, um den Zustand des Umschalters vom bestimmten Zweig zu steuern.

13. Generator nach vorhergehendem Anspruch, **dadurch gekennzeichnet, dass** er Mittel (10, 20, 21) zum Erzeugen (30) eines Signals an dem besagten zumindest einen Komparator, das die Form einer Reihe von alternierenden Intervallen aufweist, die mehreren Referenzsignalen entsprechen, welche jeweils einem Zweig entsprechen, aufweist, und **dadurch**, dass der Logikrechner (10) vorgesehen ist, um, zum Steuern eines bestimmten Zweiges, nur das Ergebnis des Vergleichs für Zeitintervalle zu berücksichtigen, bei denen der Komparator (30) ein Intervall eines Referenzsignals empfängt, das diesem Zweig (50, 51) entspricht.

14. Generator nach einem der vorhergehenden Ansprüche, in Verbindung mit Anspruch 6, Anspruch 7 oder Anspruch 8, **dadurch gekennzeichnet, dass** das kommutierte Signal und das Referenzsignal jeweils eine jeweilige Größe innerhalb der Spannung und der Intensität in einer Last (74), die am Ausgang des Generators angeordnet ist, darstellen, und **dadurch**, dass er Mittel zum Liefern, in Abhängigkeit von der Anzahl von Erscheinungen, die während eines gegebenen Zeitintervalls eines gegebenen Zustands des Umschalters (50, 51) gezählt wurde, oder von dem gemessenen Zeitintervall, das für eine gegebene Anzahl von Erscheinungen eines gegebenen Zustands des Umschalters notwendig ist, einer Anzeige oder einer Erfassung der Verzerrungen zwischen der Intensität oder der Spannung, die vom Umschalter (50, 51) und jeweils der Referenzspannung oder -intensität kommutiert wurde, aufweist.

15. Generator nach einem der vorhergehenden Ansprüche, **dadurch gekennzeichnet, dass** der Umschalter (50, 51) vorgesehen ist, um auf intermediäre Art und Weise zwischen einer Spannungsquelle und der Masse angeordnet zu sein, und dazu vorgesehen ist, einer ersten Last zwischen dieser Spannungsquelle und der Masse zugeordnet zu sein, **dadurch**, dass der Generator einen zusätzlichen Umschalter (130) zwischen der Quelle und der Masse, die einer Dissipationslast zugeordnet ist, umfasst, sowie einen Stromsensor (160) bestehend aus einer Diode, die angeordnet ist, um einen Strom zu erfassen, der aus der ersten Last (74) hervorgeht und entgegengesetzt zu demjenigen ist, der vom Generator erzeugt wird, und Mittel zum Auslösen einer Umschaltung des zusätzlichen Umschalters (130) zur Erfassung eines derartigen entgegengesetzten Stroms, so dass ein Strom in der Dissipationslast strömt, wobei diese Mittel zur Erfassung und zur Auslösung einen Logikrechner (10) umfassen.

16. Generator nach Anspruch 15, **dadurch gekennzeichnet, dass** die Mittel zur Erfassung des besagten entgegengesetzten Stroms einen Stromsensor (160) umfassen, der eine Optokopplerdiode darstellt, die am Logikrechner (10) angeschlossen ist.

17. Generator nach einem der Ansprüche 15 oder 16, **dadurch gekennzeichnet, dass** das Mittel zur Auslösung der Logikrechner (10) ist, der vorgesehen ist, um die Referenzkurve zu erzeugen.

18. Generator nach einem der vorhergehenden Ansprüche 15 bis 17, **dadurch gekennzeichnet, dass** er eine erste Diode (150) umfasst, die eine Spannungsquelle durquerend in Richtung des Versorgungsumschalters (50,51) montiert ist, und **dadurch**, dass der Stromsensor (160) eine Sendediode ist, die parallel zu dieser ersten Diode (150), in der Richtung vom Versorgungsumschalter (50,51) zur Quelle, angeordnet ist.

19. Generator nach einem der vorhergehenden Ansprüche 15 bis 18, **dadurch gekennzeichnet, dass** er eine Diode (150), die eine Quelle durchquerend in Richtung Umschalter (50,51) montiert ist, und zwei Kondensatoren (110,120), die jeweils ihre erste Klemme mit einer jeweiligen Klemme der Diode (150) verbunden und ihre zweite Klemme mit der Masse verbunden haben, umfasst.

20. Vorrichtung umfassend einen Elektromotor und einen Generator zur Versorgung dieses Motors, **dadurch gekennzeichnet, dass** dieser Generator einem der vorhergehenden Ansprüche 1 bis 19 entspricht.

21. Vorrichtung nach Anspruch 20, **dadurch gekennzeichnet, dass** er ein Mittel zum induktiven Bremsen (90, 91, 92) des Motors umfasst, und **dadurch**, dass der Logikrechner (10) vorgesehen ist, um diese Mittel zum Bremsen (90, 91, 92) mit Hilfe des besagten zumindest einen Signals, das als Antwort auf die Umschaltungen des zumindest einen Umschalters erzeugt wird, zu steuern.

22. Vorrichtung nach Anspruch 21, **dadurch gekennzeichnet, dass** der besagte zumindest eine Sensor eine Vorrichtung zur Strommessung ist.

23. Vorrichtung nach Anspruch 21 oder Anspruch 22, in Verbindung mit Anspruch 6 oder Anspruch 7, **dadurch gekennzeichnet, dass** der Rechner Mittel zum Ableiten von einer Anzahl von Erscheinungen des aktivierten Zustands in einem gegebenen Zeitintervall oder einem Zeitintervall, das notwendig ist für eine gegebene Anzahl von Erscheinungen eines aktivierten Zustands der induktiven Bremse, des guten Betriebs dieser Bremse, und zum Ausgeben eines Signals, das diesen guten Betrieb anzeigt, umfasst.

24. Vorrichtung zur Wicklung langer Produkte einen Elektromotor (74) und einen Generator zur Versorgung dieses Motors umfassend, **dadurch gekennzeichnet, dass** der Generator einem der vorhergehenden Ansprüche 1 bis 19 entspricht.

25. Vorrichtung zur induktiven Bremsung ein induktives Element und einen Generator zur Versorgung dieses induktiven Elementes umfassend, **dadurch gekennzeichnet, dass** der Generator einem der vorhergehenden Ansprüche 1 bis 19 entspricht.

26. Generatorvorrichtung einen Generator nach einem der vorhergehenden Ansprüche 1 bis 19, und eine induktive Schleife (100) umfassend, die am Ausgang des Generators angeschlossen ist und die der Versorgung mit variablem Magnetfeld einer Vorrichtung (102, 103) dient, die mit Mitteln zur Erzeugung von Strom als Antwort auf dieses variable Magnetfeld versehen ist.

27. Vorrichtung nach vorhergehendem Anspruch, **dadurch gekennzeichnet, dass** sie eine induktive Schleife (100) in gestreckter Form umfasst, die dazu vorgesehen ist, über ihr elektromagnetisches Feld an ein oder mehrere Empfänger (102) angeschlossen zu sein, die mit Mobilteilen (103) verbunden sind, welche sich parallel zur induktiven Schleife (100) ihrer Länge nach bewegen.

28. Vorrichtung zur Erfassung der Anwesenheit von Gegenständen eines gewählten Typs, eine induktive Schleife (74), Mittel zur Versorgung (10, 50, 51) der Schleife (74) und Mittel zur Erfassung (10) der Induktanzschwankung an den Klemmen der Schleife (74) als Antwort auf die Anwesenheit von Gegenständen vor dieser Schleife (74) umfassend, wobei die Mittel zur Versorgung und Erfassung durch eine Generatorvorrichtung nach Anspruch 14 gebildet werden.
